# EUROPÄISCHE PATENTANMELDUNG

(11) **EP 4 711 731 A1**
(43) Veröffentlichungstag der Anmeldung: **18.03.2026**
(21) Anmeldenummer: 25200385.0
(22) Anmeldetag: 05.09.2025
(51) Int. Cl.: G01M 3/20, G01M 3/22, G01M 3/28, G01M 3/32

(54) **DICHTEPRÜFGERÄT MIT LECKAGENSUCHSYSTEM**

(30) Priorität: 10.09.2024 AT 507352024
(71) Anmelder: AVL DiTest GmbH, 8020 Graz (AT)
(72) Erfinder: Muchitsch, Dietmar, 8020 Graz (AT); Ivantsits, Benjamin, 8010 Graz (AT); Ritsch, Julian, 8010 Graz (AT); Szuecs, Nicola, 8044 Graz (AT)
(74) Vertreter: Patentanwälte Pinter & Weiss OG

(57) **Zusammenfassung**

Um die Überprüfung von Prüfvolumina von Komponenten (20), insbesondere von Fahrzeugkomponenten, mit einem Dichteprüfgerät (1) zu verbessern und den Ablauf sowie die Anwendung der Dichteprüfung und Leckagensuche zu vereinfachen, umfasst das Dichteprüfgerät (1) ein Gehäuse (2), welches zumindest einen Prüfeingang (E), zumindest einen Prüfausgang (A1, A2) und einen Aerosolausgang (R) aufweist, wobei im Gehäuse (2) zumindest angeordnet ist: eine Pneumatikeinheit (3), welche mit dem zumindest einen Prüfeingang (E) und dem zumindest einen Prüfausgang (A1, A2) verbunden ist, eine Steuereinheit (4), welche ausgelegt ist, die Pneumatikeinheit (3) anzusteuern, um im Betrieb des Dichteprüfgeräts (1) ein am zumindest einen Prüfeingang (E) anliegendes Medium auf einen vorgegebenen ersten Druck zu ändern und das Medium mit dem ersten Druck am Prüfausgang (A1, A2) für die Überprüfung einer mit dem Prüfausgang (A1, A2) verbundenen Komponente (20) auf Dichtheit bereitzustellen und zu überwachen, und ein Aerosolgenerator (5), welcher ausgebildet ist, Aerosol (7) zu erzeugen, wobei der Aerosolgenerator (5) mit der Pneumatikeinheit (3) verbunden ist und der Aerosolgenerator (5) mit dem Aerosolausgang (R) verbunden ist, wobei die Pneumatikeinheit (3) ausgelegt ist, zur Leckagensuche das Medium mit dem ersten Druck in den Aerosolgenerator (5) zu leiten, um das im Aerosolgenerator (5) erzeugte Aerosol (7) in eine mit dem Aerosolausgang (R) des Gehäuses (2) verbundene Komponente (20) zu fördern.

## Beschreibung

### Technisches Gebiet der Erfindung

Die gegenständliche Erfindung betrifft ein Dichteprüfgerät zur Überprüfung von Komponenten, insbesondere von Fahrzeugkomponenten, auf Dichtheit und zur Leckagensuche.

### Stand der Technik

Während oder nach einer Reparatur von Fahrzeugkomponenten, wie z.B. einer Batterie oder eines Kühlmittelkreislaufs, werden die Fahrzeugkomponenten auf Dichtheit überprüft. Beispielsweise wird bei der Reparatur einer Batterie (z.B. einer Lithium-Ionen-Traktionsbatterie) das Batteriegehäuse geöffnet. Nach erfolgter Reparatur wird die Batterie wieder verschlossen und versiegelt. Im Anschluss bzw. vor Wiedereinbau der Batterie muss die Dichtheit des Batteriegehäuses nachgewiesen werden, wie z.B. in US 2022/0410717 A1 beschrieben.

In der Regel erfolgt dies mittels Prüfung eines zulässigen Druckabfalls (oder Anstiegs). Dazu wird ein zu prüfendes Volumen der Fahrzeugkomponente, wie etwa das Batteriegehäuse, mit einem Druck beaufschlagt und dann verschlossen. Anschließend wird der Druckabfall in diesem Volumen über eine bestimmte Zeit gemessen und mit einem vorgegebenen Grenzwert verglichen. Aus diesem Vergleich wird die Dichtheit der Fahrzeugkomponente ermittelt.

Eine alternative Methode besteht darin, das Prüfvolumen der Fahrzeugkomponente auf ein definiertes Druckniveau zu bringen und dieses konstant zu halten. Der Druck wird von einer Pumpe aufgebaut und ein Ventil regelt den Volumenstrom. Der Volumenstrom wird gemessen und lässt somit einen Rückschluss auf die Dichtheit der Fahrzeugkomponente zu.

Wenn eine Leckage in der Fahrzeugkomponente durch die Dichteprüfung erkannt wird, wird wie z.B. in US 9,417,152 B2 offenbart, Rauch in das zu prüfende Volumen der Fahrzeugkomponenten eingeleitet, um die Stelle der Leckage durch Austritt des Rauchs aus dem Volumen lokal festzustellen oder zu verorten. Dazu wird ein separater Rauchgenerator verwendet, in welchem zuerst Öl in einem Ölbehälter verdampft wird und der daraus erzeugte Rauch in das zu prüfende Volumen eingeleitet wird. Der Ölbehälter des Rauchgenerators wird dazu auf eine Temperatur zwischen 70 und 95°C geregelt.

Besonders durch den rasanten Zuwachs von batteriebetriebenen Fahrzeugen, welche vermehrt auf den Gebrauchtmarkt gelangen und gewartet werden, ist insbesondere eine Dichteprüfung von Batteriegehäusen von großer Bedeutung. Durch die Verwendung von zwei separaten Geräten ist dies jedoch mit zeitlichem Aufwand verbunden, um das jeweilige Gerät mit der zu überprüfenden Komponente zu verbinden und um diese zu testen bzw. auszuwerten. Durch die separaten Geräte erhöht sich auch das Risiko eines fehlerhaften Anwendens des jeweiligen Gerätes durch einen Benutzer.

### Zusammenfassung der Erfindung

Es ist daher eine Aufgabe der gegenständlichen Erfindung die Überprüfung von Prüfvolumina von Komponenten, insbesondere von Fahrzeugkomponenten, zu verbessern und den Ablauf sowie die Anwendung der Dichteprüfung und Leckagensuche zu vereinfachen.

Erfindungsgemäß wird die Aufgabe dadurch gelöst, dass das Dichteprüfgerät ein Gehäuse umfasst, welches zumindest einen Prüfeingang, zumindest einen Prüfausgang und einen Aerosolausgang aufweist, wobei im Gehäuse zumindest angeordnet ist: eine Pneumatikeinheit, welche mit dem zumindest einen Prüfeingang und dem zumindest einen Prüfausgang verbunden ist, eine Steuereinheit, welche ausgelegt ist, die Pneumatikeinheit anzusteuern, um im Betrieb des Dichteprüfgeräts ein am zumindest einen Prüfeingang anliegendes Medium auf einen vorgegebenen ersten Druck zu ändern und das Medium mit dem ersten Druck am Prüfausgang für die Überprüfung einer mit dem Prüfausgang verbundenen Komponente auf Dichtheit bereitzustellen und zu überwachen, und ein Aerosolgenerator, welcher ausgebildet ist, Aerosol zu erzeugen, wobei der Aerosolgenerator mit der Pneumatikeinheit verbunden ist und der Aerosolgenerator mit dem Aerosolausgang verbunden ist, wobei die Pneumatikeinheit ausgelegt ist, zur Leckagensuche das Medium mit dem ersten Druck in den Aerosolgenerator zu leiten, um das im Aerosolgenerator erzeugte Aerosol in eine mit dem Aerosolausgang des Gehäuses verbundene Komponente zu fördern. Durch die Kombination der Pneumatikeinheit und des Aerosolgenerators in einem gemeinsamen Gehäuse mit einer Steuereinheit sind keine separaten Geräte mehr notwendig und die Dichteprüfung sowie die Leckagensuche kann mit einem einzigen Gerät durchgeführt werden. Dadurch verringert sich insbesondere der zeitliche Aufwand, um die zu überprüfende Komponente auf Dichtheit zu testen und auszuwerten.

In einer bevorzugten Ausführungsform umfasst das Dichteprüfgerät eine Schaltereinheit, welche vorgesehen ist, die Pneumatikeinheit mit dem Aerosolgenerator oder dem Prüfausgang zu verbinden. Damit wird eine pneumatische Trennung erzielt, so dass keine Flüssigkeiten und/oder Aerosole in den jeweils anderen Pfad gelangen können, aber trotzdem nur eine Pneumatikeinheit in dem Dichteprüfgerät verwendet werden kann.

Vorzugsweise ist der erste Druck ein Unterdruck oder ein Überdruck. Dadurch kann die angeschlossene Komponente auf unterschiedlicher Weise getestet werden, wodurch die Flexibilität in der Anwendung des Dichteprüfgeräts erhöht wird.

In einer vorteilhaften Ausführungsform weist das Gehäuse einen weiteren Prüfausgang auf, welcher mit der Pneumatikeinheit verbunden ist, wobei die Pneumatikeinheit dazu ausgelegt ist, das am Prüfeingang anliegende Medium auf einen vom vorgegebenen ersten Druck unterschiedlichen zweiten Druck zu ändern und das Medium mit dem zweiten Druck am weiteren Prüfausgang bereitzustellen. Dadurch ist es möglich, mit dem Dichteprüfgerät unterschiedliche Komponenten zu testen. Beispielsweise wird zum Testen eines Kühlmittelkreislaufs ein höherer Druck(-bereich) benötigt als für ein Batteriegehäuse. Die beiden Prüfausgänge sind dabei vorzugsweise pneumatisch getrennt, sodass keine Flüssigkeiten und/oder Aerosole in den jeweils anderen Pfad gelangen können. Trotzdem kann nur eine Pneumatikeinheit in dem Dichteprüfgerät verwendet werden.

Vorzugsweise weist das Gehäuse einen Lufteinlass und einen Luftauslass auf, um im Betrieb des Dichteprüfgeräts eine durch die Erzeugung des Aerosols erwärmte Luft in der Umgebung des Aerosolgenerator durch den Luftauslass aus dem Gehäuse zu leiten und um Umgebungsluft durch den Lufteinlass in das Gehäuse zu leiten, wobei eine passive Kühlung des Gehäuses durch Konvektion stattfindet. Die elektrischen und/oder elektronischen Bauteile des Dichteprüfgeräts, welche für die Dichteprüfung verwendet werden, sind wärmeempfindlich. Bei der Kombination der Pneumatikeinheit und des Aerosolgenerators in einem gemeinsamen Gehäuse mit der Steuereinheit ist dies beachtlich, denn insbesondere bei Drucksensoren entstehen Abweichungen (Drift) der Messwerte, wenn diese unzulässig erwärmt werden bzw. Temperaturschwankungen ausgesetzt sind. Durch die passive Kühlung werden auf einfache Weise die Bauteile im Gehäuse des Dichteprüfgeräts, insbesondere die Steuereinheit und Sensorik, vor der erwärmten Luft in der Umgebung des Aerosolgenerator geschützt. Dadurch wird die Funktionalität der (temperatursensiblen) Bauteile zur Dichteprüfung sichergestellt, wodurch sich die Zuverlässigkeit und die Messgenauigkeit der Dichteprüfung erhöht.

Vorzugsweise ist der Aerosolgenerator zumindest teilweise mit einem thermisch isolierenden Material ummantelt. Die Isolierung des Aerosolgenerator ermöglicht es ebenfalls die elektrischen und/oder elektronischen Bauteile im Gehäuse des Dichteprüfgeräts vor der Wärme des Aerosolgenerator zu schützen, wodurch sich die Zuverlässigkeit und die Genauigkeit der Dichteprüfung erhöht.

In einer bevorzugten Ausführungsform ist das Gehäuse durch eine Trennwand in einen Pneumatikbereich und in einen Aerosolgeneratorbereich unterteilt, wobei im Pneumatikbereich die Pneumatikeinheit angeordnet ist und im Aerosolgeneratorbereich der Aerosolgenerator angeordnet ist und dass der Pneumatikbereich mit dem Aerosolgeneratorbereich über einen Kanal verbunden ist. Dies ermöglicht ebenfalls eine (thermische) Abtrennung des Aerosolgenerators von den elektrischen und/oder elektronischen Bauteilen zur Dichteprüfung im Pneumatikbereich, z.B. Drucksensor, die Steuereinheit, usw. Der Kanal ermöglicht es, bei Konvektion im Gehäuse kühlerer Luft von dem Pneumatikbereich gezielt in den Aerosolgeneratorbereich zu leiten.

Zusätzlich weist vorzugsweise eine dem Aerosolgenerator zugewandte Seite der Trennwand ein thermisch isolierendes Material auf. Die Isolierung der Trennwand ermöglicht es ebenfalls in einfacher Weise die elektrischen und/oder elektronischen Bauteile im Pneumatikbereich vor der Wärme des Aerosolgenerator zu schützen.

In einer weiteren bevorzugten Ausführungsform weist das Dichteprüfgerät zumindest ein Sicherheitsventil auf, welches ausgebildet ist, das Medium auf einen vorgegebenen Sicherheitsdruck zu regeln. Mit dem Sicherheitsventil ist es möglich auch bei Ausfall einer Energieversorgung oder bei Ausfall der Steuereinheit das Dichteprüfgerät zuverlässig auf ein sicheres Druckniveau zu regeln, um insbesondere einen unzulässig hohen Druck im Gehäuse zu verhindern.

Vorzugsweise ist ein Anschlussschlauch vorgesehen, welcher an einen der Prüfausgänge des Gehäuses angeschlossen ist und ein vorgegebenes Prüfvolumen definiert, um das Dichteprüfgerät zu kalibrieren. Dadurch ist es in einfacher Weise möglich das Dichteprüfgerät zu kalibrieren oder zu überprüfen ohne die Notwendigkeit eines zusätzlichen Prüfvolumens, z.B. einer Komponente, da dazu der Anschlussschlauch verwendet werden kann.

In einer vorteilhaften Ausführungsform weist das Gehäuse weiters einen Ausgangsstoffeingang auf, welcher mit dem Aerosolgenerator verbunden ist, um einen Ausgangsstoff für die Erzeugung des Aerosols bereitzustellen. Alternativ ist vorzugsweise im Gehäuse ein Ausgangsstoffbehälter angeordnet, welcher mit dem Aerosolgenerator verbunden ist, um einen Ausgangsstoff für die Erzeugung des Aerosols bereitzustellen. Dadurch kann für die Erzeugung des Aerosols der Ausgangsstoff auf unterschiedlichen Weisen bereitgestellt werden, wodurch sich die Flexibilität des Dichteprüfgeräts erhöht.

### Figurenbeschreibung

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig. 1 den grundlegenden Aufbau des erfindungsgemäßen Dichteprüfgeräts,
Fig. 2 eine bevorzugte Ausführungsform des erfindungsgemäßen Dichteprüfgeräts, und
Fig. 3 einen Luftstrom durch das Gehäuseinnere des Dichteprüfgeräts in einer seitlichen Schnittansicht.

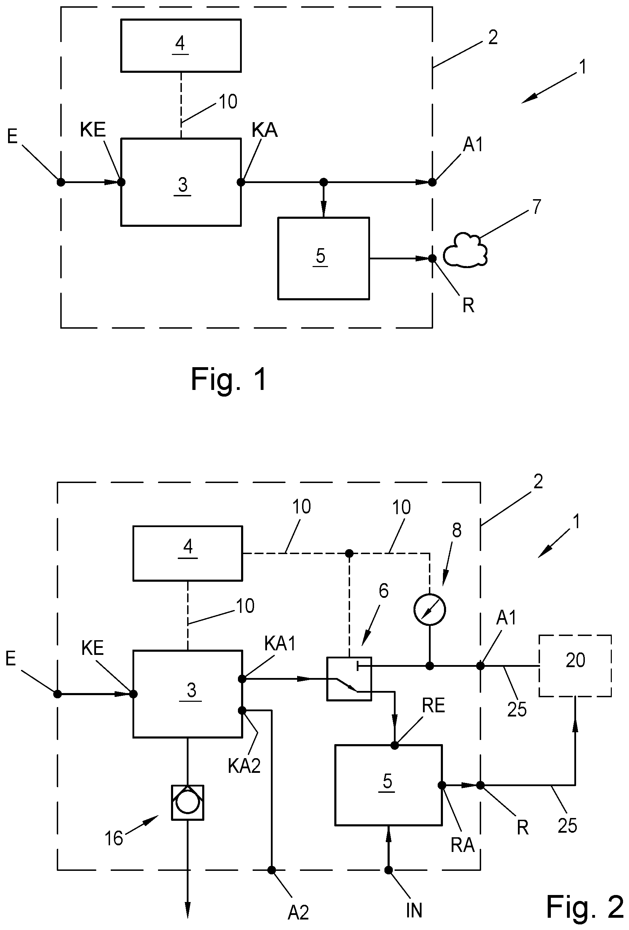

In Fig. 1 sind die grundlegenden Bauteile des erfindungsgemäßen Dichteprüfgeräts 1 lediglich schematisch dargestellt. Das Dichteprüfgerät 1 dient zur Überprüfung von Komponenten 20, insbesondere von Fahrzeugkomponenten, auf Dichtheit und zur Leckagensuche. Zu überprüfende Fahrzeugkomponenten können beispielsweise eine Batterie, ein Kühlkreislauf, etc., sein. Die Anwendung des Dichteprüfgeräts 1 ist dabei natürlich nicht auf Komponenten 20 von Fahrzeugen, wie etwa Kraftfahrzeuge, Flugzeuge, Schiffe, usw., beschränkt. Generell ist das Dichteprüfgerät 1 für Prüfvolumen von Komponenten 20 geeignet, welche auf Dichtheit überprüft werden sollen. Prüfvolumen von Komponenten 20 wie etwa Druckbehälter (z.B. in der Pharma- oder Chemiebranche), Heizungen, Rohrleitungen, Türdichtungen, usw. können ebenfalls mit dem erfindungsgemäßen Dichteprüfgerät 1 überprüft werden.

Das Dichteprüfgerät 1 umfasst ein Gehäuse 2. Das Gehäuse 2 ist vorzugsweise als eine Art Koffer (z.B. Hartschalenkoffer) ausgeführt. Der Koffer besteht beispielsweise aus zwei Kofferhälften, welche miteinander verschließbar sind. Dabei weist das Gehäuse 2 vorzugsweise ein Trageelement auf, z.B. einen Griff, eine Lasche, etc., damit ein Benutzer das Dichteprüfgerät 1 einfach transportieren kann. Alternativ kann das Gehäuse 2 des Dichteprüfgeräts 1 auch als ein Schaltschrank ausgeführt sein, um es beispielsweise an einem Prüfstand zu verwenden. Das Gehäuse 2 ist natürlich nicht auf die genannten Ausführungsformen beschränkt.

Erfindungsgemäß weist das Gehäuse 2 des Dichteprüfgeräts 1 einen Prüfeingang E, einen Prüfausgang A1 und einen Aerosolausgang R auf. Die Aus- und Eingänge A1, R, E des Gehäuses 2 sind beispielsweise als pneumatische Anschlüsse ausgeführt. An dem Prüfeingang E, dem Prüfausgang A1 und dem Aerosolausgang R können jeweils Anschlussschläuche 25 angeschlossen werden, z.B. über eine Schnellschlussverbindung. Die Anschlussschläuche 25 sind ausgelegt, um zur Überprüfung der Dichtheit und zur Leckagensuche verwendet zu werden und an das Prüfvolumen der zu prüfenden Komponente 20 angeschlossen zu werden, wie in Fig. 2 beispielhaft dargestellt.

Im Gehäuse 2 ist eine Pneumatikeinheit 3 angeordnet. Die Pneumatikeinheit 3 ist mit dem Prüfeingang E und mit dem Prüfausgang A1 verbunden. Wie in Fig. 2 dargestellt, ist der Prüfeingang E mit einem Pneumatikeingang KE der Pneumatikeinheit 3 verbunden. Der Prüfausgang A1 ist dabei mit einem Pneumatikausgang KA der Pneumatikeinheit 3 verbunden. Alternativ kann in einfacher Weise der Pneumatikeingang KE den Prüfeingang E des Gehäuses 2 ausbilden und der Pneumatikausgang KA kann den Prüfausgang A1 des Gehäuses 2 ausbilden.

Der Begriff "verbunden" bedeutet, dass die Pneumatikeinheit 3 derart mit dem Prüfeingang E und dem Prüfausgang A1 verbunden ist, um ein Medium zu fördern (z.B. fluide Verbindung über eine pneumatische Leitung). Fluide Verbindungen (pneumatisch oder hydraulisch) der Bauteile des Dichteprüfgeräts 1 sind in Fig. 1 und 2 als durchgezogenen Linien dargestellt. Entlang der Verbindungen können Bauteile, wie z.B. Filter, Drosseln, usw., vorgesehen sein. Zudem sind die Begriffe "Pneumatikeingang" und "Pneumatikausgang" nicht einschränkend, z.B. auf einen pneumatischen Anschluss, zu interpretieren, sondern dienen lediglich als Bezeichnung der Anschlüsse der Pneumatikeinheit 3.

Die Pneumatikeinheit 3 ist dazu ausgelegt, ein am Prüfeingang E anliegendes Medium auf einen vorgegebenen ersten Druck zu ändern und das Medium mit dem ersten Druck am Prüfausgang A1 bereitzustellen. In Fig. 1 ist der Weg des Mediums vom Prüfeingang E, durch die Pneumatikeinheit 3 und zum Prüfausgang A1 mittels Pfeile dargestellt. Als Medium kann beispielsweise Umgebungsluft, Stickstoff, Formiergas, Helium, etc., verwendet werden.

Die Pneumatikeinheit 3 umfasst vorzugsweise einen Kompressor und/oder einen Expander, um das Medium von einem Eingangsdruck am Prüfeingang E auf den vorgegebenen ersten Druck (z.B. zwischen 0 und 4 bar relativ zur Umgebung des Dichtegeräts 1) zu ändern. Alternativ können auch mehrere Kompressoren als Kompressorstufen und/oder mehrere Expander als Expanderstufen vorgesehen sein, um das Medium stufenweise auf den ersten Druck zu ändern. Der erste Druck hängt im wesentlich von der zu überprüfenden Komponente 20 ab. Je nach Anwendung des Dichteprüfgeräts 1 ist die Pneumatikeinheit 3 ausgelegt, des Mediums mit einem Unterdruck oder einem Überdruck am Prüfausgang A1 zu Dichteprüfung der angeschlossenen Komponenten 20 bereitzustellen.

Der Begriff "ändern" bedeutet in diesem Zusammenhang das Medium auf einen vorgegebenen Druck am Prüfausgang zu komprimieren oder zu entspannen (expandieren). Beispielsweise ist je nach Eingangsdruck des Mediums und notwendigen Druck am Prüfausgang die Pneumatikeinheit 3 ausgelegt, das Medium zu komprimieren oder zu entspannen.

Wie in Fig. 2 dargestellt, weist das Gehäuse 2 vorzugsweise einen weiteren Prüfausgang A2 auf, welcher mit der Pneumatikeinheit 3 verbunden ist. Der weitere Prüfausgang A2 kann ident ausgeführt sein wie der bereits vorhandene Prüfausgang A1. Die Pneumatikeinheit 3 ist dabei ausgelegt, das am Prüfeingang E anliegende Medium auf einen vom vorgegebenen ersten Druck unterschiedlichen zweiten Druck (z.B. zwischen 0 bis 150 mbar relativ zur Umgebung des Dichtegeräts 1) zu ändern und das Medium mit dem zweiten Druck am weiteren Prüfausgang A2 bereitzustellen. Dabei ist die Pneumatikeinheit 3 dazu ausgelegt, das Medium sowohl auf den ersten Druck zu ändern als auch auf den zweiten Druck zu ändern. Beispielsweise können zwei Kompressoren in der Pneumatikeinheit 3 vorgesehen sein, wobei einer der zwei Kompressoren ausgelegt ist, das Medium auf den ersten Druck zu komprimieren und der andere der zwei Kompressoren ausgelegt ist, das Medium auf den zweiten Druck zu komprimieren. Analog dazu können auch zwei Expander vorgesehen sein, um das Medium auf den ersten oder zweiten Druck zu entspannen.

Vorzugsweise umfasst die Pneumatikeinheit 3 eine Ventileinheit, welche ausgelegt ist, zwischen den beiden Prüfausgängen A1, A2 zu schalten. Alternativ kann das Gehäuse 2 auch einen weiteren Prüfeingang aufweisen (nicht dargestellt), welcher mit der Pneumatikeinheit 3 verbunden ist. Der weitere Prüfeingang kann ident ausgeführt sein wie der bereits vorhandene Prüfeingang E. Dabei kann die Pneumatikeinheit 3 dazu ausgelegt sein, ein Medium am Prüfeingang E auf den ersten Druck zu ändern und ein Medium am weiteren Prüfeingang auf den zweiten Druck zu ändern.

Im Gehäuse 2 ist eine Steuereinheit 4 angeordnet, welche ausgelegt ist, die Pneumatikeinheit 3 anzusteuern, um das am Prüfeingang E anliegende Medium auf den vorgegebenen ersten Druck zu ändern und das Medium mit dem ersten Druck am Prüfausgang A1 für die Überprüfung einer mit dem Prüfausgang A1 verbundenen Komponente 20 auf Dichtheit bereitzustellen und zu überwachen. Im Falle, dass der weitere Prüfausgang A2 vorgesehen ist, ist die Steuereinheit 4 ausgelegt, die Pneumatikeinheit 3 anzusteuern, um das am Prüfeingang E anliegende Medium auf den vorgegebenen zweiten Druck zu ändern und das Medium mit dem zweiten Druck am weiteren Prüfausgang A2 für die Überprüfung einer mit dem weiteren Prüfausgang A2 verbundenen Komponente 20 auf Dichtheit bereitzustellen und zu überwachen. Die Steuereinheit 4 ist vorzugsweise eine mikroprozessorbasierte Hardware, beispielsweise ein Mikrokontroller. Die Steuereinheit 4 ist zur Ansteuerung der Pneumatikeinheit 3 mit dieser über eine geeignete drahtgebundene oder drahtlose Verbindung verbunden. In den Fig. 1 und 2 ist eine drahtgebundene Verbindung 10 (z.B. eine elektrische Leitung) als strichlierte Linie dargestellt.

Die Steuereinheit 4 umfasst zudem vorzugsweise zumindest einen Drucksensor 8, um das Medium mit dem ersten Druck am Prüfausgang A1 für die Überprüfung der mit dem Prüfausgang A1 verbundenen Komponente 20 auf Dichtheit zu überwachen. Der zumindest eine Drucksensor 8 ist ausgelegt, den Druck des Mediums zu messen. Dazu ist der Drucksensor 8 beispielsweise mit der Verbindung zwischen Pneumatikausgang KA und Prüfausgang A1 verbunden (wie in Fig. 2 dargestellt). Der Drucksensor 8 kann über eine geeignete drahtgebundene oder drahtlose Verbindung mit der Steuereinheit 4 verbunden sein. In Fig. 2 ist beispielhaft eine drahtgebundene Verbindung 10 (z.B. eine elektrische Leitung) als strichlierte Linie dargestellt. Der Drucksensor 8 ist in Fig. 2 extern von der Steuereinheit 4 dargestellt, wobei dieser auch in der Steuereinheit 4 vorgesehen sein kann. Natürlich kann in gleicher Weise auch für den weiteren Prüfausgang A2 ein Drucksensor 8 vorgesehen sein, um den Druck des Mediums am weiteren Prüfausgang A2 zu messen. Vorzugsweise ist auch ein Drucksensor 8 vorgesehen, welcher den Eingangsdruck des am Prüfeingang E anliegenden Mediums misst. Zudem kann ein Drucksensor 8 im Dichteprüfgerät 1 vorgesehen sein, welcher einen Umgebungsdruck des Dichteprüfgeräts 1 misst. Der Einfachheit halber ist in Fig. 2 nur ein Drucksensor 8 dargestellt.

Der gemessene Druck des Mediums kann von der Steuereinheit 4 verwendet werden, um die Pneumatikeinheit 3 im Betrieb des Dichteprüfgeräts 1 zu regeln. Für die Überprüfung der Dichtheit der zu prüfenden Komponente 20 kann der gemessene Druck des Mediums ausgewertet werden, um einen Druckabfall im Prüfvolumen der verbundenen Komponente 20 über eine definierte Zeit zu bestimmen und mit einem vorgegebenen Grenzwert zu vergleichen. Dazu umfasst die Steuereinheit 4 vorzugsweise eine Auswerteeinheit (nicht dargestellt). Die Auswerteeinheit ist vorzugsweise in der Steuereinheit 4 integriert. Die Auswerteeinheit kann als eine mikroprozessorbasierte Hardware ausgeführt sein, beispielsweise als ein Mikrokontroller.

Alternativ kann die Steuereinheit 4 die Pneumatikeinheit 3 ansteuern, um das Prüfvolumen der verbundenen Komponente 20 auf einen definierten Druck (z.B. den ersten Druck) zu bringen und diesen konstant zu halten. Ein Volumenstrom des Mediums in das Prüfvolumen der verbundenen Komponente 20 wird gemessen und die Auswerteeinheit beurteilt darauf basierend die Dichtheit der verbundenen Komponente 20. Dazu umfasst die Steuereinheit 4 beispielsweise einen Durchflussmesser (nicht dargestellt), welcher ausgelegt ist, den Volumenstrom des Mediums in das Prüfvolumen der verbundenen Komponente 20 zu messen.

In der Steuereinheit 4 kann ein geeigneter Algorithmus hinterlegt sein, welcher dazu ausgebildet ist, ein automatisiertes Prüfprogramm zur Überprüfung der Dichtheit der verbundenen Komponenten 20 nach einer der genannten Methoden auszuführen.

Zudem kann das Dichteprüfgerät 1 eine Bedieneinheit umfassen, über welche ein Benutzer das Dichteprüfgerät 1 bedienen kann (z.B. um das Prüfprogramm zu starten). Als Bedieneinheit können Tasten, ein Touchscreen, oder ähnliches vorgesehen sein, mit welchen der Benutzer das Dichteprüfgerät 1 steuern kann. Zur Anzeige eines Ergebnisses aus der Überprüfung der Dichtheit kann das Dichteprüfgerät 1 eine Anzeigeeinheit (z.B. einen Bildschirm) umfassen. Neben einer visuellen Darstellung, kann das Ergebnis dem Benutzer auch akustisch mitgeteilt werden. Die Bedieneinheit und die Anzeigeeinheit sind vorzugsweise im Gehäuse 2 umfasst.

Im Gehäuse 2 ist weiters ein Aerosolgenerator 5 angeordnet, welcher ausgebildet ist, Aerosol 7 zu erzeugen. In Fig. 1 ist das Aerosol 7 lediglich schematisch angedeutet. Das Aerosol 7 kann durch verschiedene Methoden mit dem Aerosolgenerator 5 erzeugt werden. Vorzugsweise wird das Aerosol 7 durch Erhitzen und Verdampfen eines Ausgangsstoffes, z.B. Öl, erzeugt. Dazu umfasst der Aerosolgenerator 5 einen Behälter, in welchem der Ausgangsstoff erhitzt wird, beispielsweise mit einer Heizspirale. Der Behälter wird dabei auf etwa 70-95°C erhitzt. Dadurch erwärmt sich die Umgebung des Aerosolgenerators 5 im Gehäuse 2.

Das Gehäuse 2 kann weiters einen Ausgangsstoffeingang IN aufweisen, welcher mit dem Aerosolgenerator 5 verbunden ist, um einen Ausgangsstoff für die Erzeugung des Aerosols 7 bereitzustellen. Der Ausgangsstoffeingang IN kann beispielsweise an eine externe Quelle angeschlossen sein. Alternativ ist im Gehäuse 2 ein Ausgangsstoffbehälter angeordnet (nicht dargestellt), welcher mit dem Aerosolgenerator 5 verbunden ist, um einen Ausgangsstoff für die Erzeugung des Aerosols 7 bereitzustellen. Als Aerosol 7 kann beispielsweise Rauch, Nebel, Tracergas, etc., vorgesehen sein bzw. erzeugt werden. Während der Leckagensuche mit dem Dichteprüfgerät 1 kann bei Austritt des Aerosols 7 aus der zu überprüfenden Komponente 20 ein Leck ermittelt werden. Je nach verwendetem Aerosol 7 können unterschiedliche bekannte Methoden zum Detektieren des ausgetretenen Aerosols 7 aus der Komponente 20 verwendet werden (z.B. mittels Gasschnüffler, optisch mit UV-Licht, etc.).

Der Aerosolgenerator 5 ist mit der Pneumatikeinheit 3 und mit dem Aerosolausgang R des Gehäuses 2 verbunden. Wie in Fig. 2 dargestellt, umfasst der Aerosolgenerator 5 einen Aerosolgeneratoreingang RE und einen Aerosolgeneratorausgang RA. Die Pneumatikeinheit 3 ist ausgelegt, zur Leckagensuche das komprimierte Medium in den Aerosolgenerator 5 zu leiten. Dazu ist die Pneumatikeinheit 3 über den Pneumatikausgang KA mit dem Aerosolgeneratoreingang RE verbunden. Das Medium mit dem ersten Druck strömt über die Verbindung zwischen Pneumatikeinheit 3 und Aerosolgenerator 5 in den Aerosolgenerator 5. Durch das eingeleitete Medium wird das im Aerosolgenerator 5 erzeugte Aerosol 7 in eine mit dem Aerosolausgang R des Gehäuses 2 verbundene und zu prüfende Komponente 20 gefördert. In Fig. 2 ist der Pfad des Mediums im Betrieb des Dichteprüfgeräts 1 zur Leckagensuche mit Pfeilen angedeutet. Der Aerosolgeneratorausgang RA ist dabei mit dem Aerosolausgang R des Gehäuses 2 verbunden. Alternativ kann in einfacher Weise der Aerosolgeneratorausgang RA den Aerosolausgang R des Gehäuses 2 ausbilden.

Die Steuereinheit 4 ist ausgelegt, zur Leckagensuche die Pneumatikeinheit 3 und den Aerosolgenerator 5 anzusteuern. Beispielsweise regelt die Steuereinheit 4 eine Temperatur der Heizspirale des Aerosolgenerators 5. Die Steuereinheit 4 ist neben der Pneumatikeinheit 3 auch mit dem Aerosolgenerator 5 über eine geeignete drahtgebunden oder drahtlose Verbindung (nicht dargestellt) verbunden.

Die zu überprüfende Komponente 20 ist in Fig. 2 beispielhaft sowohl mit dem Prüfausgang A1 als auch mit dem Aerosolausgang R verbunden. Damit kann die Komponente 20 zunächst auf die Dichtheit überprüft werden und im Anschluss die Leckagensuche (falls notwendig) durchgeführt werden. Natürlich muss die Komponente 20 dazu ausgelegt sein, um mit beiden Ausgängen A1, R verbunden zu werden.

Der hinterlegte Algorithmus in der Steuereinheit 4 kann dazu ausgebildet sein, ein automatisiertes Prüfprogramm zur Überprüfung der Dichtheit der verbundenen Komponenten 20 mit anschließender Leckagensuche auszuführen.

In Fig. 1 ist der Aerosolgenerator 5 direkt mit der Pneumatikeinheit 3 verbunden, wobei das Medium von der Pneumatikeinheit 3 sowohl zum Prüfausgang A1 als auch zum Aerosolgenerator 5 gefördert wird. Das Dichteprüfgerät 1 kann auch eine Schaltereinheit 6 umfassen (wie in Fig. 2 dargestellt), welche vorgesehen ist, die Pneumatikeinheit 3 zwischen dem verbundenen Prüfausgang A und dem verbundenen Aerosolgenerator 5 zu schalten, um das Medium von der Pneumatikeinheit 3 entweder zum Prüfausgang A1 oder zum Aerosolgenerator 5 zu leiten. Wie in Fig. 2 beispielhaft dargestellt, ist die Schaltereinheit 6 stromabwärts des Pneumatikausgangs KA angeordnet und einerseits mit dem Prüfausgang A1 und andererseits mit dem Aerosolgeneratoreingang RE verbunden. Die Schaltereinheit 6 ist dabei in jener Stellung, in welcher der Pneumatikausgang KA der Pneumatikeinheit 3 mit dem Aerosolgeneratoreingang RE des Aerosolgenerators 5 verbunden ist, wobei die Leckagensuche durchgeführt werden kann. Die Steuereinheit 4 ist zur Ansteuerung der Schaltereinheit 6 ausgelegt und mit der Schaltereinheit 6 über eine geeignete drahtgebunden oder drahtlose Verbindung verbunden. In Fig. 2 ist eine drahtgebundene Verbindung 10 (z.B. elektrische Leitung) als strichlierte Linie dargestellt.

Alternativ kann die Pneumatikeinheit 3 zwei Pneumatikausgänge KA1, KA2 aufweisen, wobei einer der zwei Pneumatikausgänge KA1 mit dem Prüfausgang A verbunden ist und der andere der zwei Pneumatikausgänge KA2 mit dem Aerosolgenerator 5 verbunden ist. Die Schaltereinheit 6 kann dabei in der Pneumatikeinheit 3 umfasst sein und dazu ausgelegt sein, zwischen den beiden Pneumatikausgängen KA1, KA2 der Pneumatikeinheit 3 zu schalten.

Für den Betrieb des Dichteprüfgeräts 1 und dessen Bauteile ist eine elektrische Energieversorgung vorgesehen. Beispielsweise kann im Gehäuse 2 ein elektrischer Energiespeicher (z.B. eine Batterie) angeordnet sein, um das Dichteprüfgerät 1 mit elektrischer Energie zu versorgen und/oder das Gehäuse 2 weist einen elektrischen Anschluss auf, welcher ausgelegt ist, eine externe Energiequelle (z.B. Stromnetz) mit dem Dichteprüfgerät 1 zu verbinden, um das Dichteprüfgerät 1 mit elektrischer Energie zu versorgen.

Das Dichteprüfgerät 1 weist vorzugsweise zumindest ein Sicherheitsventil 16 auf, welches ausgebildet ist, das komprimierte Medium auf einen vorgegebenen Sicherheitsdruck zu regeln. Das Sicherheitsventil 16 ist dazu ausgelegt, um im Falle eines Wegfalls der elektrischen Energieversorgung geöffnet zu werden und das Medium (z.B. mit dem ersten Druck) zumindest teilweise aus dem Gehäuse 2 abzulassen, um dieses auf den vorgegebenen Sicherheitsdruck zu regeln. Dadurch kann ein unzulässig hoher Druck im Gehäuse 2 verhindert werden. In Fig. 2 ist beispielhaft ein Sicherheitsventil 16 angeschlossen an die Pneumatikeinheit 3 dargestellt, welches bei Auslösung das Medium aus dem Gehäuse 2 ablässt (angedeutet mit Pfeil). Vorzugsweise ist ein Sicherheitsventil 16 pro Prüfausgang A1, A2 vorgesehen. Das zumindest eine Sicherheitsventil 16 kann beispielsweise auch in der Pneumatikeinheit 3 (z.B. in der Ventileinheit) umfasst sein. Als Sicherheitsventil 16 ist beispielsweise ein Rückschlagventil, z.B. ein gesteuertes Rückschlagventil, vorgesehen.

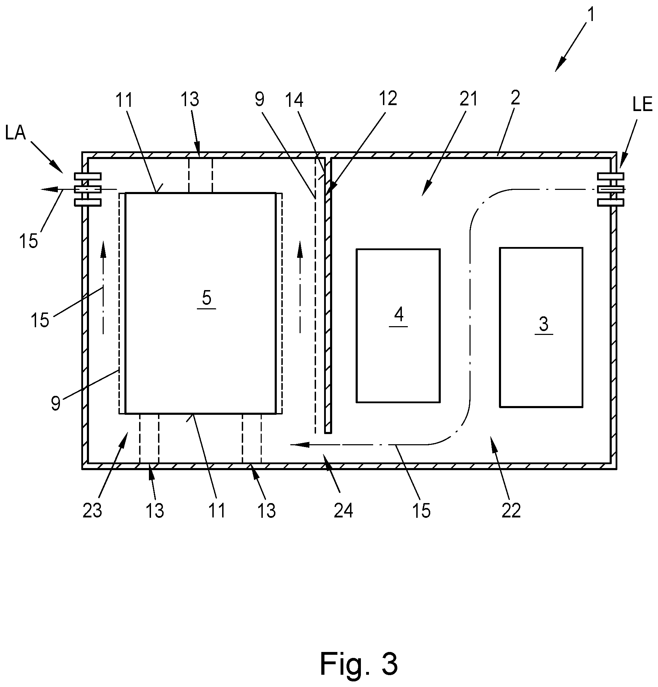

In Fig. 3 ist eine seitliche Schnittansicht des Dichteprüfgeräts 1 dargestellt. Dabei sind das Gehäuse 2, die Pneumatikeinheit 3, die Steuereinheit 4 und der Aerosolgenerator 5 lediglich schematisch angedeutet. Das Gehäuse 2 weist vorzugsweise einen Lufteinlass LE und einen Luftauslass LA auf. Der Lufteinlass LE und der Luftauslass LA sind dazu ausgelegt, dass beispielsweise Umgebungsluft durch den Lufteinlass LE in das Gehäuse 2 strömen kann und Luft im Gehäuse 2 durch den Luftauslass LA aus dem Gehäuse 2 strömen kann. Wie in Fig. 3 dargestellt, ist der Lufteinlass LE im Bereich der Pneumatikeinheit 3 und der Steuereinheit 4 angeordnet. Der Luftauslass LA ist vorzugsweise im Bereich des Aerosolgenerators 5 angeordnet. Natürlich kann je nach Ausführungsform das Gehäuse 2 auch eine Mehrzahl an Lufteinlässen LE und/oder Luftauslässen LA aufweisen.

Im Betrieb des Dichteprüfgeräts 1 wird eine durch die Erzeugung des Aerosols 7 erwärmte Luft in der Umgebung des Aerosolgenerators 5 (Temperatur von etwa 70°C) durch den Luftauslass LA aus dem Gehäuse 2 geleitet und Umgebungsluft (Temperatur unter 40°C) strömt durch den Lufteinlass LE in das Gehäuse 2 nach. Es entsteht ein Luftstrom 15 durch das Gehäuse 2. Dadurch wird eine passive Kühlung des Gehäuses 2, insbesondere des Gehäuseinneren 21, durch Konvektion ermöglicht. Der Luftstrom 15 führt die erwärmte Luft ab und kühlt elektrische und/oder elektronische Bauteile des Dichteprüfgeräts 1, insbesondere die Steuereinheit 4, den zumindest Drucksensor 8, die Auswerteeinheit, usw. Die Bauteile werden dadurch vor unzulässigem Wärmeeintrag aus der Erzeugung des Aerosols 7 geschützt. Durch die Kühlung des Gehäuses 2 können Messfehler des zumindest einen Drucksensors 8 vermieden werden. Beispielsweise entstehen Abweichungen (Drift) der Messwerte des zumindest einen Drucksensors 8, wenn dieser unzulässig erwärmt wird. In Fig. 3 ist der Luftstrom 15 lediglich beispielhaft mittels Pfeils dargestellt.

Die Konvektion findet in der Ausführungsform des Dichtegeräts 1 nach Fig. 3 natürlich statt. Zusätzlich kann auch eine erzwungene Konvektion, z.B. mittels eines Lüfters am Lufteinlass LE und/oder Luftauslass LA, vorgesehen sein kann. Dabei wird eine aktive Kühlung des Gehäuses 2 ermöglicht. Die erwärmte Luft aus der Umgebung des Aerosolgenerators 5 wird durch den Luftauslass LA aus dem Gehäuse 2 gefördert und Umgebungsluft wird durch den Lufteinlass LE in das Gehäuse 2 gefördert.

Alternativ oder zusätzlich kann der Aerosolgenerator 5 zumindest teilweise mit einem thermisch isolierenden Material 9 ummantelt sein. Beispielsweise wird als thermisch isolierendes Material 9 Keramik, Kunststoff, Glas- oder Steinwolle, Zellulose, Hanf, etc. verwendet. Das thermisch isolierende Material 9 weist eine geringere Wärmeleitfähigkeit als jenes Material auf, welches den Aerosolgenerator 5, insbesondere den Behälter für die Aerosolerzeugung, ausbildet (z.B. Aluminium oder Stahl). Wie in Fig. 3 beispielhaft dargestellt, ist der Aerosolgenerator 5 als Zylinder ausgeführt. Vorzugsweise ist an der radialen Umfangsfläche des Aerosolgenerators 5 das thermisch isolierende Material 9 vorgesehen. Dadurch wird die im Betrieb des Aerosolgenerators 5 erzeugte Wärme auf Grund der geringeren Wärmeleitfähigkeit des thermisch isolierenden Materials 9 an der radialen Umfangsfläche gezielt an die Stirnflächen 11 des Aerosolgenerators 5 geleitet, welche eine höhere Wärmeleitfähigkeit aufweisen. Der auftretenden Luftstrom 15 strömt an den Stirnflächen 11 vorbei und führt dort die Wärme bzw. die erwärmte Luft ab (Konvektion), wie in Fig. 3 dargestellt.

Das Gehäuse 2 ist vorzugsweise durch eine Trennwand 12 in einen Pneumatikbereich 22 und in einen Aerosolgeneratorbereich 23 unterteilt. Im Pneumatikbereich 22 ist zumindest die Pneumatikeinheit 3 angeordnet und im Aerosolgeneratorbereich 23 ist der Aerosolgenerator 5 angeordnet. Wie in Fig. 3 dargestellt, ist im Pneumatikbereich 22 zudem die Steuereinheit 4 angeordnet. Im Pneumatikbereich 22 sind beispielsweise auch die Drucksensoren 8 angeordnet sein. Durch die Trennwand 12 kann der Pneumatikbereich 22 von der im Betrieb des Aerosolgenerator 5 erzeugten Wärme isoliert werden. Vorzugsweise weist dazu eine dem Aerosolgenerator 5 zugewandte Seite 14 der Trennwand 12 ebenfalls ein thermisch isolierendes Material 9 auf. Dieses kann ident zu jenem thermisch isolierenden Material 9 sein, welches für die zumindest teilweise Ummantelung des Aerosolgenerators 5 verwendet wird.

Um den Luftstrom 15 gezielt zu lenken, kann der Pneumatikbereich 22 mit dem Aerosolgeneratorbereich 23 über einen Kanal 24 verbunden sein. Der Kanal 24 ist, wie in Fig. 3 beispielhaft dargestellt, in der Trennwand 12 am Boden des Gehäuses 2 vorgesehen. Radial um den Aerosolgenerator 5 bildet sich im Aerosolgeneratorbereich 23 eine Art Kamin aus, wodurch der Luftstrom 15 gezwungen wird, entlang des Aerosolgenerator 5 aufzusteigen (Kamineffekt, wie in Fig. 3 dargestellt). Die erwärmte Luft im Aerosolgeneratorbereich 23 steigt durch die verringerte Dichte auf, kältere Luft mit höherer Dichte strömt aus dem Pneumatikbereich 22 durch den Kanal 24 nach und verdrängt die erwärmte Luft, wodurch diese aus dem Luftauslass LA geleitet wird.

Zusätzlich können Einsätze 13 aus thermisch isolierendem Material 9 zwischen Aerosolgenerator 5 und Gehäuse 2 vorsehen sein. Der Aerosolgenerator 5, insbesondere dessen Umfangsflächen, sind durch die Einsätze 13 von dem Gehäuse 2 beabstandet, um im Betrieb des Dichtegeräts einen Wärmeübergang vom Aerosolgenerator 5 in das Gehäuse 2 zu unterbinden.

Die Verbindung zwischen einem der Prüfausgänge A1, A2 kann als ein vordefiniertes Prüfvolumen ausgelegt sein, um das Dichteprüfgerät 1 im Betrieb zu kalibrieren. Beispielsweise ist der Anschlussschlauch 25 vorgesehen, welcher an einem der Prüfausgänge A1, A2 des Gehäuses angeschlossen ist und ein definiertes Prüfvolumen ausbildet, um das Dichteprüfgerät 1 im Betrieb zu kalibrieren. Dabei wird beispielsweise der Druckabfall im bekannten Prüfvolumen des Anschlussschlauchs 25 über eine definierte Zeit gemessen. Der Anschlussschlauch 25 kann beispielsweise als Gewebeschlauch ausgeführt sein und mittels Schnellschlussverbindung an den jeweiligen Prüfausgang A1, A2 angeschlossen werden. Als externer Anschlussschlauch 25 ausgeführt ist dessen Service und Wartung einfach durchzuführen. Natürlich kann der Anschlussschlauch 25 auch im Gehäuseinneren 21 angeordnet und angeschlossen sein. Damit ist der Anschluss des Anschlussschlauchs 25 außerhalb des Gehäuses 2 unzugänglich.

## Patentansprüche

1. Dichteprüfgerät (1) zur Überprüfung von Komponenten (20), insbesondere von Fahrzeugkomponenten, auf Dichtheit und zur Leckagensuche, **dadurch gekennzeichnet, dass** das Dichteprüfgerät (1) ein Gehäuse (2) umfasst, welches zumindest einen Prüfeingang (E), zumindest einen Prüfausgang (A1, A2) und einen Aerosolausgang (R) aufweist, wobei im Gehäuse (2) zumindest angeordnet ist:
- eine Pneumatikeinheit (3), welche mit dem zumindest einen Prüfeingang (E) und dem zumindest einen Prüfausgang (A1, A2) verbunden ist,
- eine Steuereinheit (4), welche ausgelegt ist, die Pneumatikeinheit (3) anzusteuern, um im Betrieb des Dichteprüfgeräts (1) ein am zumindest einen Prüfeingang (E) anliegendes Medium auf einen vorgegebenen ersten Druck zu ändern und das Medium mit dem ersten Druck am Prüfausgang (A1, A2) für die Überprüfung einer mit dem Prüfausgang (A1, A2) verbundenen Komponente (20) auf Dichtheit bereitzustellen und zu überwachen, und
- ein Aerosolgenerator (5), welcher ausgebildet ist, Aerosol (7) zu erzeugen, wobei der Aerosolgenerator (5) mit der Pneumatikeinheit (3) verbunden ist und der Aerosolgenerator (5) mit dem Aerosolausgang (R) verbunden ist, wobei die Pneumatikeinheit (3) ausgelegt ist, zur Leckagensuche das Medium mit dem ersten Druck in den Aerosolgenerator (5) zu leiten, um das im Aerosolgenerator (5) erzeugte Aerosol (7) in eine mit dem Aerosolausgang (R) des Gehäuses (2) verbundene Komponente (20) zu fördern.

2. Dichteprüfgerät (1) nach Anspruch 1, **dadurch gekennzeichnet, dass** das Dichteprüfgerät (1) eine Schaltereinheit (6) umfasst, welche vorgesehen ist, die Pneumatikeinheit (3) mit dem Aerosolgenerator (5) oder dem Prüfausgang (A1) zu verbinden.

3. Dichteprüfgerät (1) nach Anspruch 1 oder 2, **dadurch gekennzeichnet, dass** der erste Druck ein Unterdruck oder ein Überdruck ist.

4. Dichteprüfgerät (1) nach einem der Ansprüche 1 bis 3, **dadurch gekennzeichnet, dass** das Gehäuse (2) einen weiteren Prüfausgang (A2) aufweist, welcher mit der Pneumatikeinheit (3) verbunden ist, wobei die Pneumatikeinheit (3) dazu ausgelegt ist, das am Prüfeingang (E) anliegende Medium auf einen vom vorgegebenen ersten Druck unterschiedlichen zweiten Druck zu ändern und das Medium mit dem zweiten Druck am weiteren Prüfausgang (A2) bereitzustellen.

5. Dichteprüfgerät (1) nach einem der Ansprüche 1 bis 4, **dadurch gekennzeichnet, dass** das Gehäuse (2) einen Lufteinlass (LE) und einen Luftauslass (LA) aufweist, um im Betrieb des Dichteprüfgeräts (1) eine durch die Erzeugung des Aerosols (7) erwärmte Luft in der Umgebung des Aerosolgenerator (5) durch den Luftauslass (LA) aus dem Gehäuse (2) zu leiten und um Umgebungsluft durch den Lufteinlass (LE) in das Gehäuse (2) zu leiten, wobei eine passive Kühlung des Gehäuses (2) durch Konvektion stattfindet.

6. Dichteprüfgerät (1) nach einem der Ansprüche 1 bis 5, **dadurch gekennzeichnet, dass** der Aerosolgenerator (5) zumindest teilweise mit einem thermisch isolierenden Material (9) ummantelt ist.

7. Dichteprüfgerät (1) nach einem der Ansprüche 1 bis 6, **dadurch gekennzeichnet, dass** das Gehäuse (2) durch eine Trennwand (12) in einen Pneumatikbereich (22) und in einen Aerosolgeneratorbereich (23) unterteilt ist, wobei im Pneumatikbereich (22) die Pneumatikeinheit (3) angeordnet ist und im Aerosolgeneratorbereich (23) der Aerosolgenerator (5) angeordnet ist **und dass** der Pneumatikbereich (22) mit dem Aerosolgeneratorbereich (23) über einen Kanal (24) verbunden ist, wobei vorzugsweise eine dem Aerosolgenerator (5) zugewandte Seite (14) der Trennwand (12) ein thermisch isolierendes Material (9) aufweist.

8. Dichteprüfgerät (1) nach einem der Ansprüche 1 bis 7, **dadurch gekennzeichnet, dass** das Dichteprüfgerät (1) zumindest ein Sicherheitsventil (16) aufweist, welches ausgebildet ist, das Medium auf einen vorgegebenen Sicherheitsdruck zu regeln.

9. Dichteprüfgerät (1) nach einem der Ansprüche 1 bis 8, **dadurch gekennzeichnet, dass** ein Anschlussschlauch (25) vorgesehen ist, welcher an einen der Prüfausgänge (A1, A2) des Gehäuses (2) angeschlossen ist und ein vorgegebenes Prüfvolumen definiert, um das Dichteprüfgerät (1) zu kalibrieren.

10. Dichteprüfgerät (1) nach einem der Ansprüche 1 bis 9, **dadurch gekennzeichnet, dass** das Gehäuse (2) weiters einen Ausgangsstoffeingang (IN) aufweist, welcher mit dem Aerosolgenerator (5) verbunden ist, um einen Ausgangsstoff für die Erzeugung des Aerosols (7) bereitzustellen **oder dass** im Gehäuse (2) ein Ausgangsstoffbehälter angeordnet ist, welcher mit dem Aerosolgenerator (5) verbunden ist, um einen Ausgangsstoff für die Erzeugung des Aerosols (7) bereitzustellen.
